# EUROPEAN PATENT APPLICATION

(11) **EP 1 233 550 A1**
(43) Date of publication of application: **21.08.2002**
(21) Application number: 00976302.0
(22) Date of filing: 16.11.2000
(51) Int. Cl.: H04B 10/08, H04L 29/06

(54) **METHOD AND APPARATUS FOR DATA COMMUNICATION**

(30) Priority: 22.11.1999 JP 33081899
(71) Applicant: SHARP KABUSHIKI KAISHA, Osaka-shi, Osaka-fu 545-0013 (JP)
(72) Inventor: SUMI, Kazuyuki, Sharp Co., Ltd, Osaka-shi, Osaka 545-0013 (JP); NISHIMURA, Takashi, Sharp Co., Ltd, Osaka-shi, Osaka 545-0013 (JP); ICHIKAWA, Yuji, Sharp Co., Ltd, Osaka-shi, Osaka 545-0013 (JP)
(74) Representative: Müller, Frithjof E., Dipl.-Ing.
(86) International application number: JP0008099
(87) International publication number: WO01039404

(57) **Abstract**

A data communication device (30) recognizes the connection between devices for digital data communication through an optical cable (1) by transmitting and receiving a predetermined tone signal. The data communication device includes a circuit (7) that identifies a first tone signal to confirm the connection between devoices of a first communication scheme performed by a first communication circuit (10) and a second tone signal to confirm the connection between devices of a second communication scheme performed by a second communication circuit (11).

## Description

### Technical field

The present invention relates to an apparatus and a method for recognizing connection between digital data communication devices by transmitting and receiving a tone signal.

### Background art

Modern digital data communication devices are furnished with a plug-and-play capability that permits automatic recognition of connection and conducting of communication between devices, such as connection between a computer and a peripheral device or connection between a CS antenna for receiving digital broadcasts and a digital VTR.

One conventional way of automatically recognizing connection between devices is by detecting a change in voltage in compliance with the IEEE 1394 standard. However, this method works only over short connection distances because the maximum connection distance provided by the standard is 4.5 m.

To solve this problem, a communication scheme that works over longer connection distances has been proposed in P1394b Draft Standard for a High Performance Serial Bus (Supplement) (hereinafter referred to simply as the "P1394b scheme"). When an optical cable with two cores, one for transmission and the other for reception, is used, this communication scheme works over connection distances up to 100 m. When devices ready for this communication scheme are connected together, the connection between them is recognized by transmitting and receiving a predetermined tone signal.

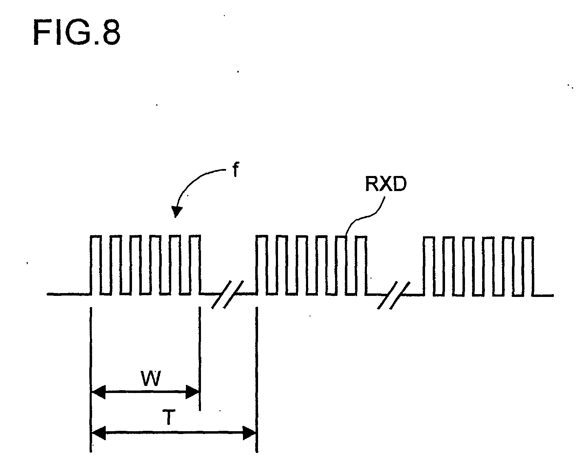

In this connection recognition method, the connected devices each transmit the predetermined tone signal until one recognizes the other. As shown in Fig. 8, this tone signal has a predetermined tone frequency f [Hz], tone repetition period T [sec], and tone duration W [sec]. If a tone signal received by one device is the predetermined tone signal, this device transmits a response signal to the other device, with the result that the connection between the two devices is recognized and communication between them starts being conducted. For example, the P1394b scheme proposes the use of a tone signal having an f = 48 to 64 MHz, T = 42.67 msec, and W = 666.67 µsec.

On the other hand, another communication scheme that uses an optical cable with a single core has also been proposed. Because of constraints associated with the accuracy of separation between transmitted and received signals, this scheme works over shorter connection distances than where an optical cable with two cores is used. However, this scheme has the advantage of permitting the use of more compact optical cables and connectors. Connection between devices ready for this communication scheme is recognized by a connection recognition method using a tone signal similar to that described above.

Of the two communication schemes described above, the former uses an optical cable with two cores, and thus has the disadvantage of large optical cables and connectors; the latter has the disadvantage of shorter connection distances. For these reasons, it is likely that, in the future, communication between devices will be achieved by still another communication scheme that uses an optical cable with a single core but nevertheless works over longer connection distances. In this communication scheme also, connection between devices that can communicate with each other will be recognized by a connection recognition method using a tone signal similar to that described above.

In that event, however, there will exist two different communication schemes that both use an optical cable with a single core, and therefore there is a possibility that devices using different communication schemes will be connected together by the use of an optical cable with a single core, which both of those communication schemes use, with a result that it is impossible to recognize connection and conduct communication between the devices. This can be avoided by providing each device with two communication circuits to cope separately with the two communication schemes. Even then, however, extra operation, such as operating a selector switch, will be necessary to recognize connection and conduct communication, which complicates the operation and thus spoils the user-friendliness of the device.

### Disclosure of the invention

An object of the present invention is to provide a data communication apparatus and a data communication method that permit easy recognition of connection between devices for improved user-friendliness.

To achieve the above object, according to the present invention, a data communication apparatus that transmits and receives a predetermined tone signal to recognize connection between devices that communicate digital data to each other by way of an optical cable is provided with an identifier that identifies a first tone signal with which connection to a device using a first communication scheme is recognized and a second tone signal with which connection to a device using a second communication scheme is recognized.

In this configuration, when devices that conduct data communication with each other are connected to the data communication apparatus, each transmits a predetermined tone signal until connection to the other is recognized. In the data communication apparatus, the identifier checks whether the received tone signal is the first or second tone signal. If this tone signal is identified as a tone signal that indicates a usable communication scheme, connection is recognized.

According to the present invention, in the data communication apparatus configured as described above, the optical cable has a single core.

According to the present invention, in the data communication apparatus configured as described above, the identifier also identifies a digital audio signal received. In this configuration, each of the devices that conduct data communication with each other transmits a predetermined tone signal until connection to the other is recognized. In the data communication apparatus, the identifier checks whether the received signal is the first or second tone signal or a digital audio signal. If this signal is identified as a tone signal that indicates a usable communication scheme or a digital audio signal, connection is recognized.

According to the present invention, in the data communication apparatus configured as described above, a response signal is transmitted back according to the result of identification by the identifier. In this configuration, for example where communication is possible by the first or second communication scheme, if the received signal is the first tone signal, the first tone signal is transmitted back and, if the received signal is the second tone signal, the second tone signal is transmitted back. With a device that can communicate only by the first communication scheme, if the received signal is the second tone signal, no response signal can be transmitted back, and thus connection is not recognized.

According to the present invention, the data communication apparatus configured as described above is further provided with indicating means for indicating that connection has been recognized by the first communication scheme, by the second communication scheme, or with a digital audio signal according to the result of identification by the identifier. In this configuration, for example, when the first tone signal is received and communication is conducted by the first communication scheme, an indication to that effect is given. Where communication is possible only by the first communication scheme, if the received signal is the second tone signal, an indication that a device using the second communication scheme is connected is given.

According to the present invention, in the data communication apparatus configured as described above, the first and second tone signals differ in at least one of tone frequency, tone repetition period, and tone duration. In this configuration, the identifier identifies the first and second tone signals on the basis of differences in their tone frequency, tone repetition period, or tone duration, or a combination of these.

According to the present invention, in the data communication apparatus configured as described above, the first and second tone signals differ in tone repetition period and tone duration. In this configuration, the identifier identifies the first and second tone signals on the basis of differences in their tone repetition period and tone duration.

According to the present invention, in the data communication apparatus configured as described above, the connection between the devices is confirmed by a tone signal transmitting procedure defined in the P1394b scheme.

According to the present invention, a data communication method that transmits and receives a predetermined tone signal to recognize connection between devices that communicate digital data to each other by way of an optical cable is provided with an identifier that identifies a first tone signal with which connection to a device using a first communication scheme is recognized and a second tone signal with which connection to a device using a second communication scheme is recognized. Here, a response signal is transmitted back according to the result of identification.

### Brief description of drawings

Fig. 1 is a diagram showing the configuration of the data communication apparatus of a first embodiment of the invention.
Fig. 2 is a diagram showing the configuration of the identification circuit of the data communication apparatus of the first embodiment of the invention.
Fig. 3 is a diagram showing a tone signal fed to the identification circuit of the data communication apparatus of the first embodiment of the invention and the pulse signal into which the tone signal is converted.
Fig. 4 is a diagram showing the pulse signals produced from the first and second tone signals fed to the identification circuit of the data communication apparatus of the first embodiment of the invention.
Figs. 5A and 5B are flow charts showing the procedure for detecting connection performed by the identification circuit of the data communication apparatus of the first embodiment of the invention.
Fig. 6 is a diagram showing the configuration of the data communication apparatus of a second embodiment of the invention.
Fig. 7 is a diagram showing the configuration of the data communication apparatus of a third embodiment of the invention.
Fig. 8 is a diagram showing the details of a tone signal.

### Best mode for carrying out the invention

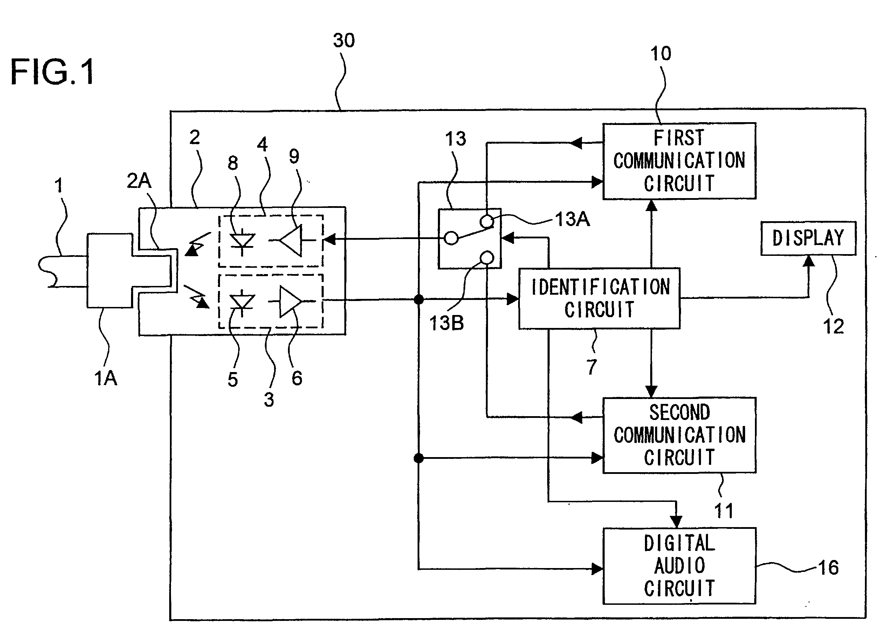

Hereinafter, embodiments of the present invention will be described with reference to the drawings. Fig. 1 is a diagram showing the configuration of the data communication apparatus of a first embodiment. The data communication apparatus 30 is provided with a front end 2 that is connected through an optical cable 1 to an external device. The front end 2 has a receptacle 2A formed therein into which a plug 1A of the optical cable 1 is fitted. The plug 1A and the receptacle 2A are, for example, a so-called φ3.5 mm mini phone plug and jack as widely used in audio equipment and the like. The optical cable 1 has a single core.

Provided integrally with the front end 2 are a receiver circuit 3 and a transmitter circuit 4 each composed of a photoelectric conversion circuit. The receiver circuit 3 has a photodiode 5, an amplifier 6, and a comparator (not shown), and serves to convert an optical signal fed to the receptacle 2A into an electric signal and amplify it. The transmitter circuit 4 is composed of a light-emitting device 8 such as a light-emitting diode or laser diode and a driver 9 for driving it, and serves to convert an electric signal for transmission fed thereto through a selector switch 13 into an optical signal and optically outputs it to the receptacle 2A.

Connected to the receiver circuit 3 are a first communication circuit 10, a second communication circuit 11, an identification circuit 7, and a digital audio circuit 16. The first communication circuit 10 is a circuit that performs transmission and reception by using signals conforming to a first communication scheme, and the second communication circuit 11 is a circuit that performs transmission and reception by using signals conforming to a second communication scheme. The first and second communication circuits 10 and 11 are connected through the selector switch 13 to the transmitter circuit 4.

The digital audio circuit 16 processes and then outputs a digital audio signal fed thereto. The identification circuit 7 is fed with a tone signal for connection recognition as shown in Fig. 8 described earlier, and serves to check whether communication is possible with the device connected or not. According to the result of this checking, the identification circuit 7 controls the first and second communication circuits 10 and 11, the digital audio circuit 16, and the selector switch 13. Moreover, a display 12 is connected to the identification circuit 7 to display the checking result and notify the user thereof.

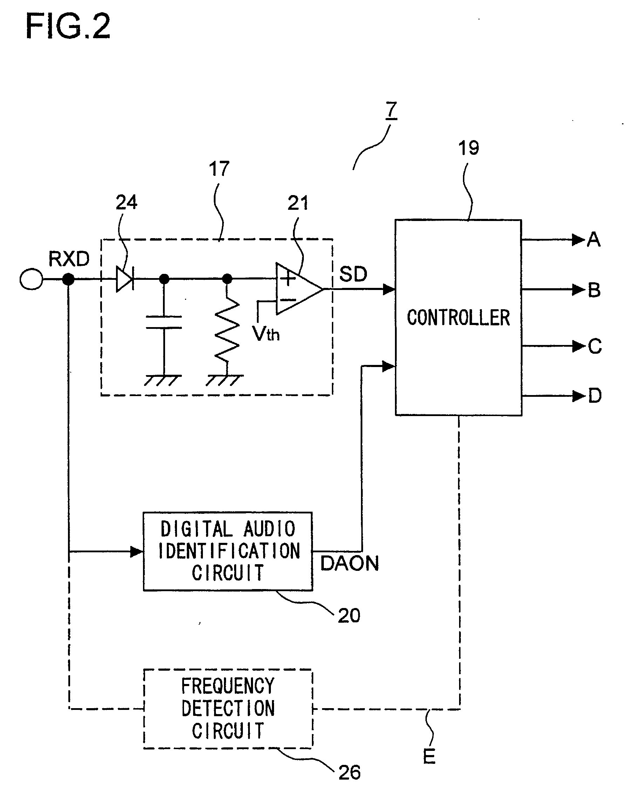

Fig.2 shows the details of the identification circuit 7. The identification circuit 7 is provided with a converter circuit 17 that converts a tone signal into a pulse signal, a digital audio identification circuit 20 that identifies a digital audio signal, and a controller 19. An input signal RXD fed to the identification circuit 7 is fed to both the converter circuit 17 and the digital audio identification circuit 20.

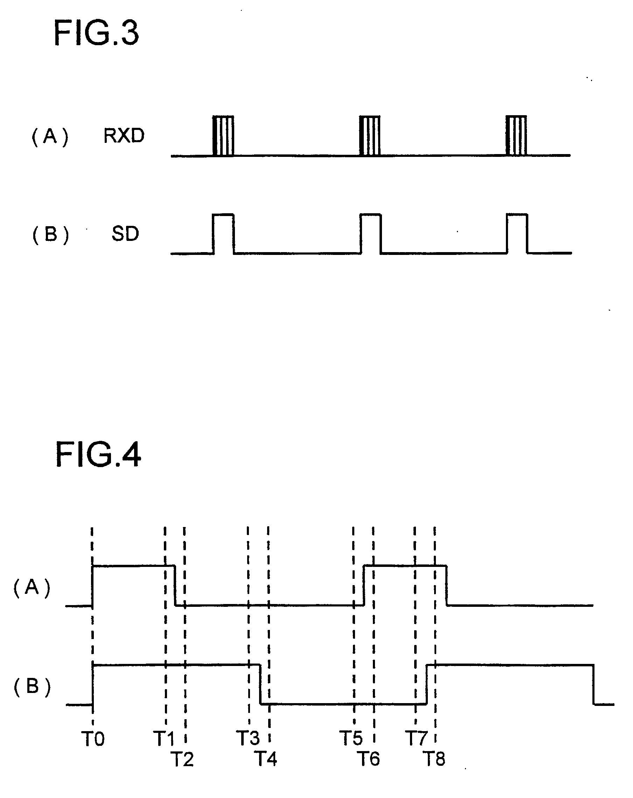

If the input signal RXD is a tone signal as shown at (A) in Fig. 3 (for details, see Fig. 8), when it is fed to the converter circuit 17, it is rectified by a diode 24 and is then smoothed by a smoothing circuit composed of a capacitor 23. The capacitor 23, while it is not receiving the tone signal, is discharged through a resistor 22. Thereafter, a comparator 21 compares the resulting signal with a predetermined voltage Vth and outputs a pulse signal SD that is kept at H level only while the tone signal is present as shown at (B) in Fig. 3. On the basis of this pulse signal SD, the controller 19 identifies the tone signal as will be described later.

If the input signal RXD is a digital audio signal, exploiting the fact that, whereas a tone signal has a tone frequency f of several tens of MHz, a digital audio signal has a frequency of several MHz, the digital audio identification circuit 20, by detecting the frequency or data duration of the input signal RXD, can identify it as a digital audio signal. The digital audio identification circuit 20 then produces an identification signal DAON. If the input signal RXD is found to be a digital audio signal, DAON = 1, and, if not, DAON = 0.

Incidentally, a digital audio signal is modulated on a biphase basis, and thus shifts between H and L levels. On the other hand, in a case where the receiver circuit 3 (see Fig. 1) employs an AC amplifier, noise may be fed to the identification circuit 7 when no signal is present. If noise having a frequency of several MHz is fed to the digital audio identification circuit 20, it may erroneously identify the noise as a digital audio signal, making DAON = 1.

However, whereas the pulse signal SD remains at H level all the time when a digital audio signal is fed to the converter circuit 17 and is converted into a pulse signal SD, noise, even if fed to the converter circuit 17, cannot charge the capacitor 23 sufficiently, and thus the output of the converter circuit 17 remains at L level. In this way, noise can be distinguished. In this embodiment, as will be described later, a digital audio signal is identified by the controller 19 on the basis of the identification signal DAON and the pulse signal SD.

Connection to a device using the first communication scheme is recognized on the basis of a first tone signal, and connection to a device using the second communication scheme is recognized on the basis of a second tone signal. These first and second tone signals are transmitted and received by a tone signal transmission/reception procedure defined in the P1294 scheme. Specifically, devices transmit a predetermined tone signal to each other and, if the received tone signal indicates a usable communication scheme, they transmit a response signal to each other and thereby recognize connection. Thereafter, digital data communication is conducted by the use of that communication scheme.

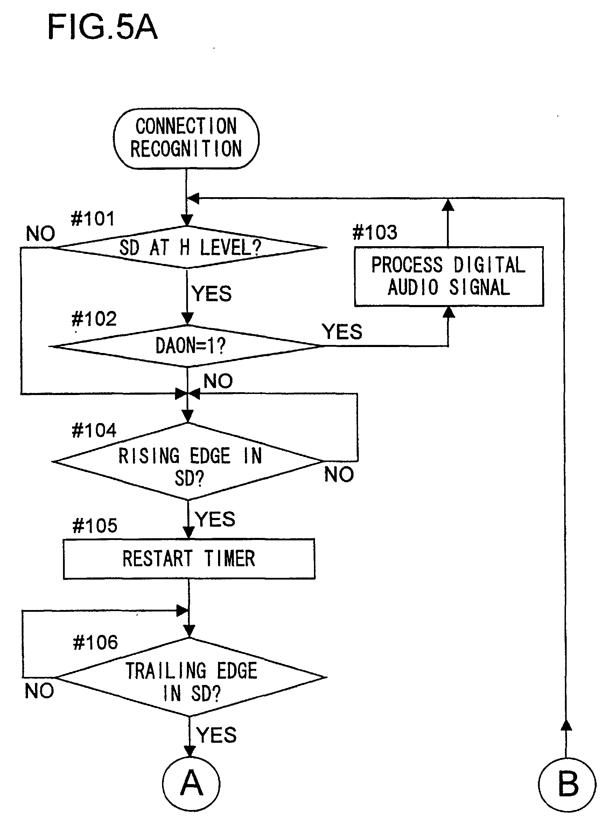

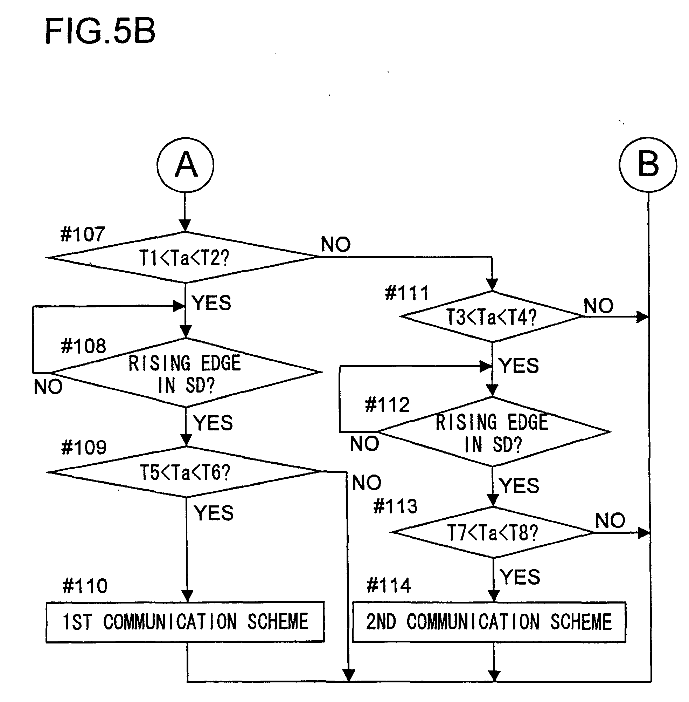

The pulse signal SD has waveforms as shown at (A) and (B) in Fig. 4 when obtained from the first and second tone signals, respectively. This pulse signal SD is, together with the identification signal DAON, fed to the controller 19, which recognizes connection and controls the first and second communication circuits 10 and 11, the audio circuit 16, and the selector switch 13 as described earlier (A to D in Fig. 2). Now, the procedure for connection recognition will be described with reference to flow charts in Figs. 5A and 5B and to Fig. 4.

First, in step #101, whether the pulse signal SD is at H level or not is checked. If the pulse signal SD is at L level, the input signal RXD is not a digital audio signal, and therefore the flow proceeds to step #104 described later, without checking the output of the digital audio identification circuit 20. If the pulse signal SD is at H level, then, in step #102, whether the identification signal DAON output from the digital audio identification circuit 20 is "1" or not is checked.

If the identification signal DAON is "0," the input signal RXD is not a digital audio signal, and therefore the flow proceeds to step #104. If the identification signal DAON is "1," the input signal RXD is identified as a digital audio signal, and thus the connected device is recognized as a device that outputs a digital audio signal.

Then, in step #103, the digital audio signal is processed by the digital audio circuit 16 (see Fig. 1). Simultaneously, the display 12 is so controlled as to indicate that the data communication apparatus is operating in a digital audio mode. The digital audio circuit 16 and the transmitter circuit 4 may be coupled together through the selector switch 13 (see Fig. 1) to make transmission of a digital audio signal possible.

In step #104, a rising edge (T0 in Fig. 4) in the pulse signal SD is waited for and, on detection thereof, in step #105, a timer provided in the controller 19 is restarted. At this point, the counter value Ta of this timer is Ta = T0 (= 0). Then, in step #106, a trailing edge in the pulse signal SD is waited for.

On detection of a trailing edge in the pulse signal SD, in step #107, whether the counter value Ta of the timer is in the range between predetermined values T1 and T2 (see Fig. 4) or not is checked. When the input signal RXD is converted into the pulse signal SD, the pulse signal SD first rises and then falls with different delays depending on the type of the input signal RXD. Thus, the pulse width is checked against the predetermined period from T1 to T2. If the counter value Ta is between the range from T1 to T2, the input signal RXD is recognized as having a tone duration W (see Fig. 8) that coincides with that of the first tone signal. Then, in step #108, the next rising edge in the pulse signal SD is waited for.

On detection of the next rising edge in the pulse signal SD, in step #109, whether the counter value Ta of the timer is in the range between predetermined values T5 and T6 or not is checked. If the counter value Ta is in the range between T5 and T6, the input signal RXD is recognized as having a tone repetition period T that coincides with that of the first tone signal. Thus, the input signal RXD is identified as the first tone signal.

Then, in step #110, the selector switch 13 is turned to the position in which its terminal 13A is selected, so that the first communication circuit 10 is controlled to transmit a response signal. Thus, connection between the devices is recognized, and the display 12 is controlled to indicate that connection to a device using the first communication scheme has been recognized.

If, in step #107, the counter value Ta is not in the range between the predetermined values T1 and T2, then the flow proceeds to step #109, where whether the counter value Ta is in the range between predetermined values T3 and T4 or not is checked. If the counter value Ta is not in the range between T3 and T4, the input signal RXD is neither the first nor the second tone signal, and therefore connection cannot be recognized. Thus, back in step #101, the steps performed thus far are repeated until a signal for connection recognition is received. If the counter value Ta is in the range between T3 and T4, the input signal RXD is recognized as having a tone duration W that coincides with that of the second tone signal.

Then, in step #112, the next rising edge in the pulse signal SD is waited for. On detection of the rising edge, in step #113, whether the counter value Ta is in the range between predetermined values T7 and T8 or not is checked. If the counter value Ta is not in the range between T7 and T8, connection cannot be recognized. Thus, back in step #101, the steps performed thus far are repeated.

If the counter value Ta is in the range between T7 and T8, the input signal RXD is recognized as having a tone repetition period T that coincides with that of the second tone signal. Thus, the input signal RXD is identified as the second tone signal. Then, in step #114, the selector switch 13 is turned to the position in which its terminal 13b is selected, so that the second communication circuit 11 is controlled to transmit a response signal. Thus, connection between the devices is recognized, and the display 12 is controlled to indicate that connection to a device using the second communication scheme has been recognized.

Here, the first tone signal has, for example, a tone frequency f= 48 to 64 MHz, a tone repetition period T = 42.67 msec, and a tone duration W = 666.67 µsec (i.e. this tone signal is assumed to be conforming to the P1394b scheme). On the other hand, the second tone signal has, for example, a tone frequency f = 48 to 64 MHz, a tone repetition period T = 200 msec, and a tone duration W = 3 msec.

In principle, the first and second tone signals can be distinguished from each other by making them different in at least one of their tone frequency f, tone repetition period T, and tone duration W. For example, the two tone signals can be distinguished on the basis of their tone duration W alone by performing a procedure similar to that shown in the flow chart in Fig. 5 described above but modified so that steps #108 to #109 and #112 to #113 are omitted.

In this embodiment, however, the two tone signals are made different in two parameters, i.e. in tone repetition period T and tone duration W, and they are distinguished by detecting those two parameters. This is preferable because doing so helps reduce the occurrence of erroneous recognition due to noise, enhance noise immunity, and prevent malfunctioning.

In a case where the two tone signals are distinguished on the basis of their tone frequency f, it is necessary to use the input signal RXD itself, which is a tone signal before being converted into the pulse signal SD. As indicated by broken lines E in Fig. 2 described earlier, providing a frequency detection circuit 26 makes it possible to distinguish the first and second tone signals from each other. In this case, however, distinguishing the tone signals, which have high frequencies, requires a complicated configuration in the frequency detection circuit 26. To avoid this, it is preferable to distinguish the tone signals on the basis of their tone repetition period T or tone duration W.

In this embodiment, when the input digital signal is the first or second tone signal or a digital audio signal, connection to the connected device is automatically recognized. After the recognition of connection, communication is conducted by the use of the first or second communication scheme or reception of a digital audio signal is performed. This eliminates the need for the user to perform extra operation according to the type of the connected device, and thus helps enhance user-friendliness. Even when no connection is recognized, the display 12 (see Fig. 1) may give an indication to that effect, for example, by lighting or extinguishing an LED.

In a case where both of the devices connected together are provided with the data communication apparatus 30 of this embodiment, if one transmits the first tone signal and the other the second tone signal, after reception of those signals, each transmits back a response signal after shifting to the communication scheme corresponding to the signal it has received. This may cause the devices to fail to recognize connection. This can be avoided by configuring the devices so that they first transmit the first tone signal when they have just been connected together.

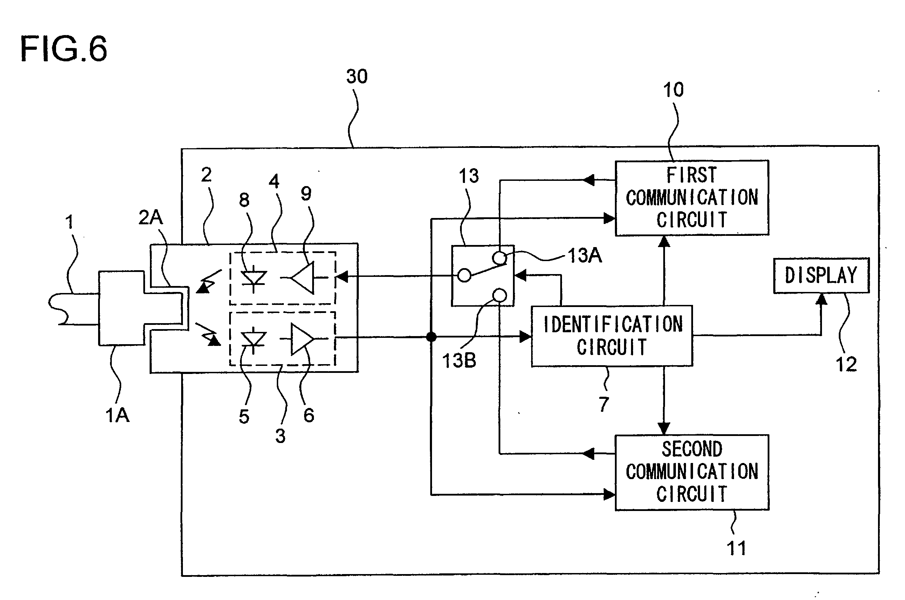

Fig. 6 is a diagram showing the configuration of the data communication apparatus of a second embodiment. In this embodiment, as compared with the first embodiment shown in Figs. 1 to 5B, the digital audio circuit 16 is omitted, so that communication is possible with a device using the first or second communication scheme. Accordingly, the identification circuit 7 here is configured without the digital audio identification circuit 20 as compared with that shown in Fig. 2.

In this configuration, as in the first embodiment, the identification circuit 7 identifies the first or second tone signal, and controls the first and second communication circuits 10 and 11, the selector switch 13, and the display 12. In this way, connection to a device using the first or second communication scheme is recognized, making communication with the device using either of the two communication schemes possible. The tone signals are distinguished by a procedure similar to that shown in the flow charts in Figs. 5A and 5B described above but modified so that steps #101 to #103 are omitted.

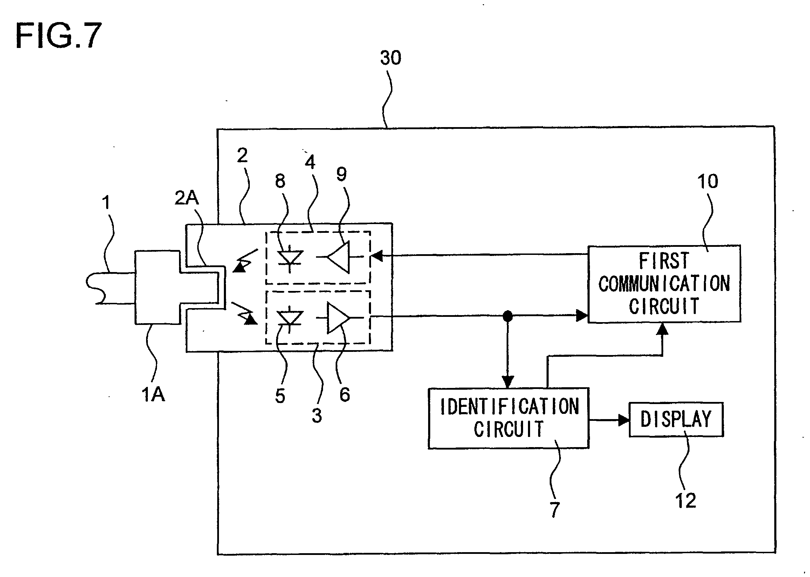

Fig. 7 is a diagram showing the configuration of the data communication apparatus of a third embodiment. In this embodiment, as compared with the first embodiment shown in Figs. 1 to 5B, the digital audio circuit 16, the second communication circuit 11, and the selector switch 13 are omitted, so that communication is possible only with a device using the first communication scheme. Accordingly, the identification circuit 7 here is configured without the digital audio identification circuit 20 as compared with that shown in Fig. 2. The first and second tone signals are distinguished through connection recognition performed according to a flow chart similar to that of the second embodiment.

In this configuration, as in the first and second embodiments, the identification circuit 7 identifies the first or second tone signal, and controls the first communication circuit 10 and the display 12. In this way, connection to a device using the first communication scheme is recognized, making communication with the device possible.

When a device using the second communication scheme is connected, the connected device is recognized as a device using the second communication scheme, and an indication to that effect is given on the display 12. When no connection to a device is recognized, an indication that the connected device cannot be identified is given. This makes it easy for the user to judge whether failure to recognize connection is due to difference in the communication scheme used or due to other causes such as a fault.

### Industrial applicability

As described above, according to the present invention, when an input digital signal is a first or second tone signal, which permits recognition of connection to a device using a first or second communication scheme respectively, or a digital audio signal, it is identified by an identifier, and if the connected device is found to be a device with which communication is possible, a response signal is transmitted back. This permits automatic recognition of connection to the connected device. After the recognition of connection, communication is conducted by the use of the first or second communication scheme, or transmission or reception of a digital audio signal is performed. In this way, for example, even if there are two communication schemes that use an optical cable with a single core, there is no need for the user to perform extra operation according to the connected device. This enhances user friendliness.

Moreover, according to the present invention, by making the first and second tone signals different in at least one of their tone frequency, tone repetition period, and tone duration, it is possible to distinguish them easily. Making the two tone signals different in tone repetition period and tone duration makes it possible to distinguish them after converting them into pulse signals. This not only helps simplify the circuit configuration, but also helps reduce the occurrence of erroneous recognition due to noise, enhance noise immunity, and prevent malfunctioning.

## Claims

1. A data communication apparatus that transmits and receives a predetermined tone signal to recognize connection between devices that communicate digital data to each other by way of an optical cable, comprising:
an identifier that identifies a first tone signal with which connection to a device using a first communication scheme is recognized and a second tone signal with which connection to a device using a second communication scheme is recognized.

2. A data communication apparatus as claimed in claim 1,
wherein the optical cable has a single core.

3. A data communication apparatus as claimed in claim 1,
wherein the identifier also identifies a digital audio signal received.

4. A data communication apparatus as claimed in claim 1,
wherein a response signal is transmitted back according to a result of identification by the identifier.

5. A data communication apparatus as claimed in claim 1, further comprising:
indicating means for indicating that connection has been recognized by the first communication scheme, by the second communication scheme, or with a digital audio signal according to a result of identification by the identifier.

6. A data communication apparatus as claimed in claim 1,
wherein the first and second tone signals differ in at least one of tone frequency, tone repetition period, and tone duration.

7. A data communication apparatus as claimed in claim 1,
wherein the first and second tone signals differ in tone repetition period and tone duration.

8. A data communication apparatus as claimed in claim 1,
wherein the connection between the devices is confirmed by a tone signal transmitting procedure defined in the P1394b scheme.

9. A data communication method that transmits and receives a predetermined tone signal to recognize connection between devices that communicate digital data to each other by way of an optical cable, comprising:
an identifier that identifies a first tone signal with which connection to a device using a first communication scheme is recognized and a second tone signal with which connection to a device using a second communication scheme is recognized,
wherein a response signal is transmitted back according to a result of identification.
